# EUROPÄISCHE PATENTSCHRIFT

(11) **EP 2 773 878 B1**
(45) Veröffentlichungstag und Bekanntmachung des Hinweises auf die Patenterteilung: **27.04.2016**
(21) Anmeldenummer: 13766881.0
(22) Anmeldetag: 09.09.2013
(51) Int. Cl.: F16C 19/52, B61B 12/00, F16C 19/55

(54) **NOTLAUFLAGERUNG**
EMERGENCY BEARING MECHANISM
PALIER À FONCTION D'URGENCE

(30) Priorität: 13.09.2012 AT 10012012
(43) Veröffentlichungstag der Anmeldung: 10.09.2014
(73) Patentinhaber: Innova Patent GmbH, 6922 Wolfurt (AT)
(72) Erfinder: PRIMUS, Günther, 6858 Schwarzach (AT); SCHMIDINGER, Klaus, 6867 Schwarzenberg (AT)
(74) Vertreter: Beer & Partner Patentanwälte KG
(86) Internationale Anmeldenummer: PCT/AT2013/000145
(87) Internationale Veröffentlichungsnummer: WO 2014/040096

(56) Entgegenhaltungen:
- WO-A1-2012/080983
- DE-A1-102010 032 110
- FR-A- 568 608
- FR-A5- 2 211 999
- US-A- 3 452 349
- US-A- 4 664 539
- US-A1- 2003 123 767
- US-B1- 6 445 099

## Beschreibung

Die Erfindung betrifft eine Lagereinheit einer Seilscheibe einer Seilbahn, bei der die Seilscheibe an einer Welle angeordnet ist, die in Lagern in einem Lagergestell gelagert ist, wobei ein Innenring wenigstens eines ersten Lagers mit der Welle verbunden ist.

Die erfindungsgemäße Lagereinheit ist nicht nur für Seilscheiben einer Seilbahn anwendbar sondern auch für Seilscheiben auf anderen Einsatzgebieten, ebenso wie für Seilrollen, Riemenscheiben, Kettenscheiben oder -räder oder dergleichen. Im Folgenden wird die Erfindung jedoch beispielhaft in Verbindung mit einer Seilscheibe einer Seilbahn beschrieben.

Wenn bei einer Seilbahn ein Lagerschaden bei einer Seilscheibe auftritt, sollte diese jedenfalls noch so lange gedreht werden können, bis alle Fahrgäste in den Kabinen oder auf den Sesseln bis in eine Station befördert wurden, in der sie dann aussteigen können.

Aus der WO 2012/080983 A1 ist die Lagerung einer Seilscheibe mit zwei konzentrischen Lagern bekannt, wobei ein Lager ein Wälzlager und das andere Lager ein Gleitlager ist. Der Innenring und der Außenring des Gleitlagers sind über einen Stift miteinander verbunden, der bei Überlast an einer als Kerbe ausgeführten Sollbruchstelle bricht, womit das Gleitlager die drehbare Lagerung der Seilscheibe übernehmen kann.

US 3,452,349 A und US 2003/0123767 A1 zeigen auch Notlauflageranordnungen.

Der Erfindung liegt die Aufgabe zu Grunde, eine Lagereinheit einer Seilscheibe einer Seilbahn zur Verfügung zu stellen, die ein Weiterdrehen der Seilscheibe auch bei einem Lagerschaden ermöglicht.

Diese Aufgabe wird mit einer Lagereinheit mit den Merkmalen des Anspruchs 1 oder des Anspruchs 2 gelöst.

Falls das erste Lager oder Hauptlager beschädigt ist und sich nicht mehr drehen lässt, kann die Seilscheibe über das zweite Lager, das bevorzugt nur ein für Notbetrieb ausgelegtes Lager und daher günstiger ist, noch so lange gedreht werden, bis alle Fahrgäste evakuiert sind und gegebenenfalls auch noch alle Fahrbetriebsmittel eingezogen und allfällige sonstigen Instandhaltungs- oder Reparaturarbeiten durchgeführt werden konnten, bevor das erste Lager und allenfalls sonst noch beschädigte Teile ausgetauscht bzw. repariert werden.

Das zweite Lager ist radial außerhalb des ersten Lagers angeordnet. Das heißt, dass das Hauptlager wie an sich bekannt auf der Welle der Seilscheibe angeordnet ist und über das radial außerhalb angeordnete Notlauflager im Lagergestell gelagert ist.

Bei drehmomentbelasteten Wellen, wie jenen von Seilscheiben, muss auch bei einem Wellenbruch gewährleistet sein, dass die Seilscheibe nicht kippt, mit anderen Worten stabil in der korrekten Lage gehalten bzw. gelagert wird.

Erfindungsgemäß wird zur Lösung dieses Problems vorgeschlagen, dass eine Nabe der Seilscheibe über zweite Notlauflager im Lagergestell gelagert ist.

Wenn dabei der Innenring der zweiten Notlauflager mit Spiel auf der Nabe angeordnet ist, stehen diese zweiten Notlauflager bei normalem Betrieb und sind vollständig unbelastet, sodass sie nur dafür ausgelegt werden müssen, die Seilscheibe bei einem Wellenbruch in ihrer Position zu halten und ein Weiterdrehen der Seilscheibe zu gewährleisten, bis alle Fahrgäste evakuiert sind und gegebenenfalls auch noch alle Fahrbetriebsmittel eingezogen sind.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung eines bevorzugten Ausführungsbeispiels der Erfindung unter Bezugnahme auf die angeschlossenen Zeichnungen. Es zeigt:
Fig. 1 die gesamte Lager- und Antriebsanordnung einer Seilscheibe einer Seilbahn,

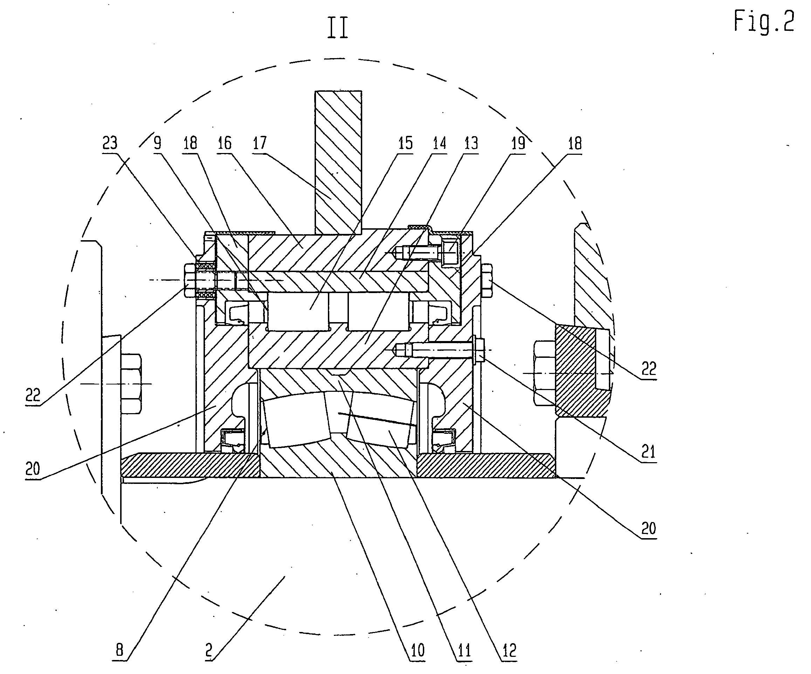

Fig. 2 ein Detail aus Fig. 1 und
Fig. 3 ein weiters Detail aus Fig. 1

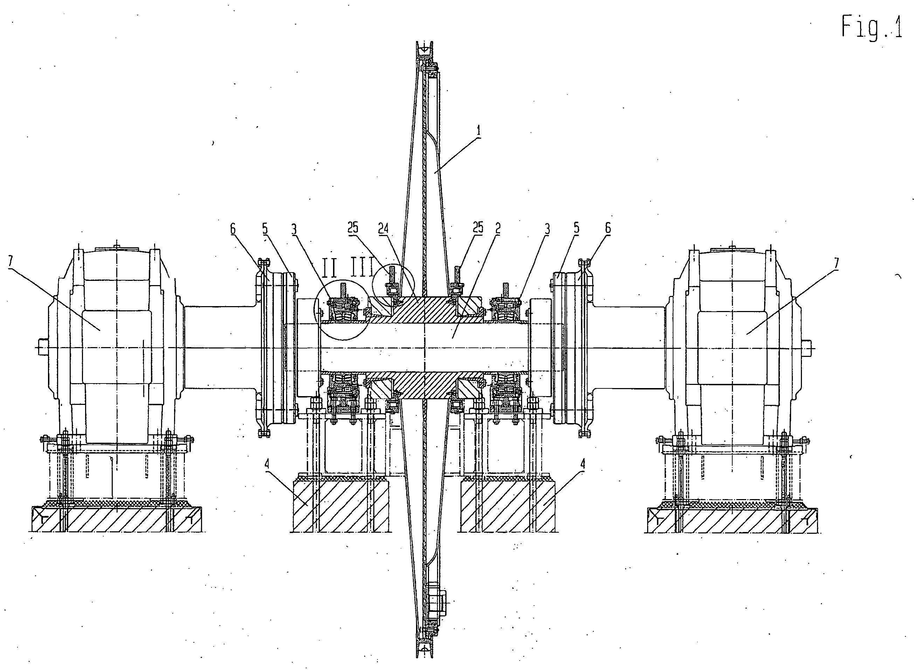

In Fig. 1 ist eine Lager- und Antriebsanordnung einer Seilscheibe 1 einer Seilbahn dargestellt, die über eine Welle 2 und zwei Lägereinheiten 3 in einem Lagergestell 4 gelagert ist. Über Flansche 5, 6 ist die Welle 2 mit zwei Antrieben 7, die entweder elektrische oder hydraulische Antriebe sein können, verbunden. Selbstverständlich könnte aber auch nur ein einziger Antrieb 7 vorhanden sein.

Jede Lagereinheit 3 weist ein erstes, für normalen Betrieb ausgelegtes Hauptlager 8 und ein zweites, für Notbetrieb ausgelegtes Notlauflager 9 auf. Das Hauptlager 8, das ein Festlager oder ein Loslager sein kann, weist auf an sich bekannte Art einen an der Welle 2 befestigten Innenring 10 und einen Außenring 11 auf, zwischen denen sich Wälzkörper 12 drehen. Das Notlauflager 9 ist in der dargestellten Ausführungsform ebenfalls ein Wälzlager mit einem Innenring 13, einem Außenring 14 und Wälzkörpern 15.

Der Innenring 13 des Notlauflagers 9 ist mit dem Außenring 11 des Hauptlagers 8 verbunden, d.h. dass die auf die Lager wirkenden Radialkräfte übertragen werden. Der Innenring 13 und der Außenring 11 können aber in axialer Richtung und ggf. in Umfangsrichtung verschiebbar sein. Der Außenring 14 des Notlauflagers 9 ist mit einem Tragring 16 verbunden, der in einer Tragscheibe 17 des Lagergestells 4 befestigt ist. Die Verbindung des Innenrings 13 des Notlauflagers 9 mit dem Außenring 11 des Hauptlagers 8 kann z.B. ein Presssitz sein, ebenso aber auch ein Schiebesitz.

Am Tragring 16 sind seitlich zwei ringscheibenförmige Zentrierlagerdeckel 18 mit Schrauben 19 befestigt, die der axialen Zentrierung des Notlauflagers und auch dessen Abdichtung dienen. Weiters sind am Innenring 13 des Notlauflagers 9 Lagerdeckel 20 mit Schrauben 21 befestigt, die auch die Abdichtung der Lager 8, 9 übernehmen. Die Zentrierlagerdeckel 18 und die Lagerdeckel 20 sind über jeweils wenigstens eine Schraube 22 mit einer Sollbruchstelle, einen Scherbolzen oder dergleichen, miteinander verbunden.
Der Innenring 13 und der Außenring 14 des Notlauflagers 9 sind somit über die Zentrierlagerdeckel 18, die Lagerdeckel 20 und den Tragring drehfest miteinander verbunden, sodass im Normalbetrieb nur die beiden Hauptlager 8 drehen. Sollte das Hauptlager aus irgend einem Grund zerstört oder so stark beschädigt werden, dass es nicht mehr dreht, werden die Schrauben 22 abgeschert, wodurch sich der Innenring 13 und der Außenring 14 des Notlauflagers 9 gegeneinander verdrehen können und in weiterer Folge das Notlauflager 9 die Lagerfunktion der Welle 2 im Lagergestell 4 übernimmt. Um ein kontrolliertes bzw. sicheres Abscheren der Schrauben 22 oder dergleichen zu gewährleisten, sind diese über elastische Buchsen 23 in den Lagerdeckeln 20 gelagert.

Die Lagerdeckel 20 sind bevorzugt so dimensioniert, dass sie die gesamte Lagerkraft der jeweiligen Lagereinheit 3 tragen können. Dies hat den Vorteil, dass eine Lagereinheit 3 über die Lagerdeckel 20 und das Notlauflager 9 auch dann funktionsfähig bleibt, wenn ein Hauptlager 8 völlig zusammenbricht oder es durch übermäßigen Verschleiß zu viel Spiel bekommt.

Je nachdem, wie das Notlauflager 9 dimensioniert ist, kann damit entweder nur noch ein Notbetrieb zum Evakuieren der Fahrgäste oder auch ein längerer Betrieb ermöglicht werden.

Anstelle eines Außenringes 14 für das Notlauflager kann auch der Tragring 16 dessen Funktion übernehmen, was die Konstruktion des Notlauflagers 9 vereinfacht.

Zwischen dem Innenring 13 des Notlauflagers 9 und dem Außenring 11 des Hauptlagers 8 kann ein Zwischenring angeordnet sein. Dieser kann im einfachsten Fall eine zylinderförmige Hülse sein. Der Zwischenring könnte aber auch den Innenring 14 des Notlauflagers 9 ersetzen. Außerdem kann der Zwischenring verwendet werden, um das Notlauflager 9 in axialer und/oder radialer Richtung gegenüber dem Hauptlager 8 zu versetzen, wofür der Zwischenring eine im Wesentlichen zylindrische Form oder einen im Querschnitt etwa Z-förmig abgesetzten Durchmesser aufweisen kann. In letzterem Fall können das Notlauflager 9 und das Hauptlager 8 in Achsrichtung im Wesentlichen oder zumindest zum Teil nebeneinander, gegebenenfalls mit unterschiedlichen Lagerdurchmessern, angeordnet werden.

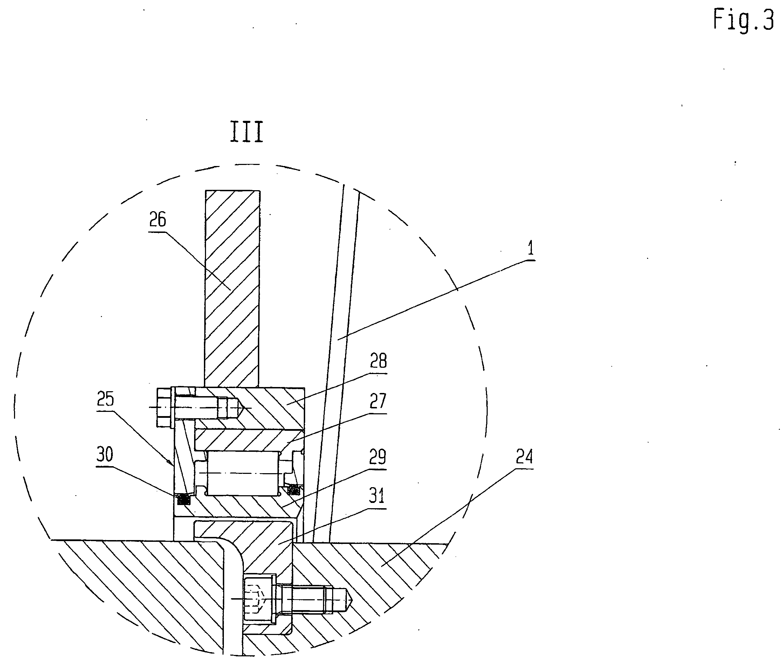

In Fig. 3 ist ein weiteres Paar Notlauflager 25, das in Verbindung mit dem erfindungsgemäßen Notlauflager verwendet wird, im Detail zu sehen, das als Seilscheibenfangvorrichtung dient, um die Seilscheibe 1 zu lagern, wenn die Welle 2 bricht oder ein anderer Schaden auftritt, der die korrekte Lagerung der Seilscheibe 1 gefährden würde.

Die zweiten Notlauflager 25 sind ebenfalls über Tragscheiben 26 im Lagergestell 4 gelagert, wobei der Außenring 27 des Notlauflagers 25 in einem Tragring 28 an der Tragscheibe 26 befestigt ist. Anstelle eines Außenringes 27 für das Notlauflager 25 kann auch der Tragring 28 dessen Funktion übernehmen, was die Konstruktion des Notlauflagers 25 vereinfacht. Der Innenring 29 des Notlauflagers 25 ist mit einem kleinen Spiel bzw. Spalt 30 an einem Lagerring 31 an der Nabe 24 der Seilscheibe 1 angeordnet.

Da der Innenring 29 des Notlauflagers 25 nicht am Lagerring 31 anliegt, dreht sich der Innenring 29 nicht mit der Seilscheibe 1 mit. Sollte allerdings z.B. durch einen Bruch der Welle 2 die Seilscheibe 1 kippen, wird sie durch die Notlauflager 25 gestützt und kann zumindest eine gewisse Zeit lang noch weiter gedreht werden.

Die Erfindung ist nicht auf Wälzlager beschränkt sondern kann auch bei Gleitlagern eingesetzt werden. Eine Kombination von Gleit- und Wälzlagern ist ebenso möglich. Außerdem könnten der Innenring 13 und der Außenring 14 des Notlauflagers 9 über eine Verbindung mit einer Sollbruchstelle direkt miteinander verbunden sein.

## Patentansprüche

1. Lagereinheit (3) einer Seilscheibe (1) einer Seilbahn, bei der die Seilscheibe (1) an einer Welle (2) angeordnet ist, die in Lagern (8, 9) in einem Lagergestell (4) gelagert ist, wobei ein Innenring (10) wenigstens eines ersten Lagers (8) mit der Welle (2) verbunden ist, **dadurch gekennzeichnet, dass** der Außenring (11) dieses ersten Lagers mit einem Innenring (13) eines zweiten Lagers (9) verbunden und über dieses zweite Lager (9) im Lagergestell (4) gelagert ist, dass das zweite Lager (9) radial außerhalb des ersten Lagers (8) angeordnet ist und dass sich der Innenring (13) des zweiten Lagers (9) im Fall eines Defektes des ersten Lagers (8) über wenigstens eine Stützeinrichtung, vorzugsweise einen Lagerdeckel (20), an der Welle (2) abstützt.

2. Lagereinheit (3) einer Seilscheibe (1) einer Seilbahn, bei der die Seilscheibe (1) an einer Welle (2) angeordnet ist, die in Lagern (8, 9) in einem Lagergestell (4) gelagert ist, wobei ein Innenring (10) wenigstens eines ersten Lagers (8) mit der Welle (2) verbunden ist, **dadurch gekennzeichnet, dass** der Außenring (11) dieses ersten Lagers über einen Zwischenring mit einem Innenring (13) eines zweiten Lagers (9) verbunden und über dieses zweite Lager (9) im Lagergestell (4) gelagert ist, dass das zweite Lager (9) radial außerhalb des ersten Lagers (8) angeordnet ist und dass sich der Zwischenring im Fall eines Defektes des ersten Lagers (8) über wenigstens eine Stützeinrichtung, vorzugsweise einen Lagerdeckel (20), an der Welle (2) abstützt.

3. Lagereinheit nach Anspruch 1 oder 2, **dadurch gekennzeichnet, dass** das zweite Lager (9) axial versetzt zum ersten Lager (8) angeordnet ist.

4. Lagereinheit nach einem der Ansprüche 1 bis 3, **dadurch gekennzeichnet, dass** das erste Lager (8) ein für normalen Betrieb ausgelegtes Lager und das zweite Lager (9) ein für Notbetrieb ausgelegtes Lager ist.

5. Lagereinheit nach Anspruch 4, **dadurch gekennzeichnet, dass** der Innenring (13) und der Außenring (14) des für Notbetrieb ausgelegten Lagers (9) drehfest miteinander verbunden ist.

6. Lagereinheit nach Anspruch 5, **dadurch gekennzeichnet, dass** die Verbindung zwischen Innenring (13) und Außenring (14) eine Sollbruchstelle aufweist.

7. Lagereinheit nach einem der Ansprüche 4 oder 5, **dadurch gekennzeichnet, dass** der Innenring (13) und der Außenring (14) des für Notbetrieb ausgelegten Lagers (9) mit dem Lagergestell (4) drehfest verbunden sind.

8. Lagereinheit nach Anspruch 7, **dadurch gekennzeichnet, dass** der Innenring (13) des für Notbetrieb ausgelegten Lagers (9) mit dem Lagergestell (4) über eine Sollbruchstelle drehfest verbunden ist.

9. Lagereinheit nach einem der Ansprüche 6 bis 8, **dadurch gekennzeichnet, dass** die Sollbruchstelle von wenigstens einer Schraube (22), einem Scherbolzen oder dergleichen gebildet wird.

10. Lagereinheit nach Anspruch 9, **dadurch gekennzeichnet, dass** die Schraube (22), der Scherbolzen oder dergleichen die Stützeinrichtung und den Außenring (14) des zweiten Lagers (9) miteinander verbindet.

11. Lagereinheit nach Anspruch 9, **dadurch gekennzeichnet, dass** die Schraube (22), der Scherbolzen oder dergleichen die Stützeinrichtung und einen mit dem Lagergestell (4) verbundenen Zentrierlagerdeckel (18) miteinander verbindet.

12. Lagereinheit nach Anspruch 11, **dadurch gekennzeichnet, dass** die Schraube (22), der Scherbolzen oder dergleichen in elastischen Buchsen in der Stützeinrichtung gelagert sind.

13. Lagereinheit nach einem der Ansprüche 1 bis 12, **dadurch gekennzeichnet, dass** eine Nabe (24) der Seilscheibe (1) über zweite Notlauflager (25) im Lagergestell (4) gelagert ist.

14. Lagereinheit nach Anspruch 13, **dadurch gekennzeichnet, dass** der Innenring der zweiten Notlauflager (25) mit Spiel auf der Nabe (24) angeordnet ist.

15. Lagereinheit nach einem der Ansprüche 1 bis 14, **dadurch gekennzeichnet, dass** das erste Lager (8), das zweite Lager (9) und/oder das zweite Notlauflager (25) Gleitlager oder Wälzlager sind.

## Claims

1. Bearing unit (3) of a sheave (1) of a cableway, in which the sheave (1) is arranged at a shaft (2) which is mounted in bearings (8, 9) in a bearing support (4), an inner ring (10) of at least one first bearing (8) being connected with the shaft (2), **characterized in that** the outer ring (11) of this first bearing is connected with an inner ring (13) of a second bearing (9) and arranged in the bearing support (4) via this second bearing (9), **in that** the second bearing (9) is arranged radially outside of the first bearing (8), and **in that** the inner ring (13) of the second bearing (9), in case of a defect of the first bearing (8), is supported by the shaft (2) by means of at least one support device, preferably a bearing cap (20).

2. Bearing unit (3) of a sheave (1) of a cableway, in which the sheave (1) is arranged at a shaft (2) which is mounted in bearings (8, 9) in a bearing support (4), an inner ring (10) of at least one first bearing (8) being connected with the shaft (2), **characterized in that** the outer ring (11) of this first bearing is connected by means of an intermediate ring with an inner ring (13) of a second bearing (9) and arranged in the bearing support (4) via this second bearing (9), **in that** the second bearing (9) is arranged radially outside of the first bearing (8), and **in that** the intermediate ring, in case of a defect in the first bearing (8), is supported by the shaft (2) by means of at least one support device, preferably a bearing cap (20).

3. Bearing unit according to claim 1 or 2, **characterized in that** the second bearing (9) is arranged in an axially offset manner with respect to the first bearing (8).

4. Bearing unit according to one of the claims 1 to 3, **characterized in that** the first bearing (8) is a bearing designed for normal use and the second bearing (9) is a bearing designed for emergency use.

5. Bearing unit according to claim 4, **characterized in that** the inner ring (13) and the outer ring (14) of the bearing designed for emergency use (9) are connected to one another in a torque-proof manner.

6. Bearing unit according to claim 5, **characterized in that** the connection between inner ring (13) and outer ring (14) has a predetermined breaking point.

7. Bearing unit according to one of the claims 4 or 5, **characterized in that** the inner ring (13) and the outer ring (14) of the bearing designed for emergency use (9) are connected to the bearing support (4) in a torque-proof manner.

8. Bearing unit according to claim 7, **characterized in that** the inner ring (13) of the bearing designed for emergency use (9) is connected to the bearing support (4) in a torque-proof manner by means of a predetermined breaking point.

9. Bearing unit according to one of the claims 6 to 8, **characterized in that** the predetermined breaking point is composed of at least one screw (22), a shear bolt or the like.

10. Bearing unit according to claim 9, **characterized in that** the screw (22), the shear bolt or the like connects the support device and the outer ring (14) of the second bearing (9) with one another.

11. Bearing unit according to claim 9, **characterized in that** the screw (22), the shear bolt or the like connects the support device and a centering bearing cap connected to the bearing support (4) with one another.

12. Bearing unit according to claim 11, **characterized in that** the screw (22), the shear bolt or the like are arranged in elastic bushings in the support device.

13. Bearing unit according to one of claims 1 to 12, **characterized in that** a hub (24) of the sheave (1) is arranged in the bearing support (4) via second fail-safe bearings (25).

14. Bearing unit according to claim 13, **characterized in that** the inner ring of the second fail-safe bearing (25) is arranged with clearance on the hub (24).

15. Bearing unit according to claims 1 to 14, **characterized in that** the first bearing (8), the second bearing (9) and/or the second fail-safe bearing (25) are friction bearings or roller bearings.

## Revendications

1. Unité de paliers (3) d'une poulie de renvoi (1) d'un téléphérique pour laquelle la poulie de renvoi (1) est montée sur un arbre (2) qui est logé dans des paliers (8, 9) dans un châssis de paliers (4), une bague intérieure (10) d'au moins un premier palier (8) étant raccordée à l'arbre (2), **caractérisée en ce que** la bague extérieure (11) de ce premier palier est raccordée à une bague intérieure (13) d'un deuxième palier (9) et logée par ce deuxième palier (9) dans le châssis de paliers (4), **en ce que** le deuxième palier (9) est disposé radialement en-dehors du premier palier (8) et **en ce que** la bague intérieure (13) du deuxième palier (9) s'appuie en cas de défaut du premier palier (8) sur au moins un dispositif de soutien, de préférence un chapeau de paliers (20), sur l'arbre (2).

2. Unité de paliers (3) d'une poulie de renvoi (1) d'un téléphérique pour laquelle la poulie de renvoi (1) est disposée sur un arbre (2) qui est logé dans les paliers (8, 9) dans un châssis de paliers (4), une bague intérieure (10) d'au moins un premier palier (8) étant raccordée à l'arbre (2), **caractérisée en ce que** la bague extérieure (11) de ce premier palier est raccordée par une bague intermédiaire à une bague intérieure (13) d'un deuxième palier (9) et est logée par ce deuxième palier (9) dans le châssis de paliers (4), **en ce que** le deuxième palier (9) est disposé radialement en-dehors du premier palier (8) et **en ce que** la bague intermédiaire s'appuie en cas d'un défaut du premier palier (8) sur au moins un dispositif de soutien, de préférence un chapeau de paliers (20), sur l'arbre (2).

3. Unité de paliers selon la revendication 1 ou 2, **caractérisée en ce que** le deuxième palier (9) est disposé axialement décalé par rapport au premier palier (8).

4. Unité de paliers selon l'une quelconque des revendications 1 à 3, **caractérisée en ce que** le premier palier (8) est un palier conçu pour un fonctionnement normal et le deuxième palier (9) est un palier conçu pour un fonctionnement de secours.

5. Unité de paliers selon la revendication 4, **caractérisée en ce que** la bague intérieure (13) et la bague extérieure (14) du palier (9) conçu pour un fonctionnement de secours sont raccordés l'un à l'autre de manière solidaire en rotation.

6. Unité de paliers selon la revendication 5, **caractérisée en ce que** la liaison entre la bague intérieure (13) et la bague extérieure (14) comporte un point de rupture.

7. Unité de paliers selon l'une quelconque des revendications 4 ou 5, **caractérisée en ce que** la bague intérieure (13) et la bague extérieure (14) du palier (9) conçu pour un fonctionnement de secours sont reliées de manière solidaire en rotation au châssis de paliers (4).

8. Unité de paliers selon la revendication 7, **caractérisée en ce que** la bague intérieure (13) du palier (9) conçu pour un fonctionnement de secours est reliée par un point de rupture de manière solidaire en rotation au châssis de paliers (4).

9. Unité de paliers selon la revendication 6 à 8, **caractérisée en ce que** le point de rupture est formé par au moins une vis (22), un boulon de cisaillement ou un élément analogue.

10. Unité de paliers selon la revendication 9, **caractérisée en ce que** la vis (22), le boulon de cisaillement ou l'élément analogue relie entre eux le dispositif de soutien et la bague extérieure (14) du deuxième palier (9).

11. Unité de paliers selon la revendication 9, **caractérisée en ce que** la vis (22), le boulon de cisaillement ou l'élément analogue relie entre eux le dispositif de soutien et un chapeau de paliers de centrage (18) raccordé au châssis de paliers (4).

12. Unité de paliers selon la revendication 11, **caractérisée en ce que** la vis (22), le boulon de cisaillement ou l'élément analogue sont logés dans des coussinets élastiques dans le dispositif de soutien.

13. Unité de paliers selon l'une quelconque des revendications 1 à 12, **caractérisée en ce qu'**un moyeu (24) de la poulie de renvoi (1) est logé par le deuxième palier de secours (25) dans le châssis de paliers (4).

14. Unité de paliers selon la revendication 13, **caractérisée en ce que** la bague intérieure du deuxième palier de secours (25) est monté avec du jeu sur le moyeu (24).

15. Unité de paliers selon l'une quelconque des revendications 1 à 14, **caractérisée en ce que** le premier palier (8), le deuxième palier (9) et/ou le deuxième palier de secours (25) sont des paliers lisses ou des paliers à roulement.
